# EUROPEAN PATENT SPECIFICATION

(11) **EP 4 098 812 B1**
(45) Date of publication and mention of the grant of the patent: **26.08.2026**
(21) Application number: 22176342.8
(22) Date of filing: 31.05.2022
(51) Int. Cl.: E02F 9/22, F16H 61/423

(54) **POWER TRANSMISSION SYSTEM FOR CONSTRUCTION MACHINERY**
KRAFTÜBERTRAGUNGSSYSTEM FÜR BAUMASCHINEN
SYSTÈME DE TRANSMISSION DE PUISSANCE POUR MACHINES DE CONSTRUCTION

(30) Priority: 31.05.2021 KR 20210070143; 02.08.2021 KR 20210101410
(43) Date of publication of application: 07.12.2022
(73) Proprietor: HD Hyundai Infracore Co., Ltd., Incheon 22502 (KR)
(72) Inventor: KWAK, Hongsup, 15010 Siheung-si, Gyeonggi-do (KR); PARK, Junhong, 10385 Goyang-si, Gyeonggi-do (KR)
(74) Representative: Isarpatent

(56) References cited:
- US-A- 5 203 168
- US-A1- 2004 211 614
- US-B2- 8 646 263

## Description

### TECHNICAL FIELD

Embodiments of the present invention relate to a power transmission device for a construction machine, and more particularly, to a power transmission device for a construction machine that may prevent a rapid increase of a capacity of a travel motor when the construction machine is switched to a stop state while traveling.

### BACKGROUND ART

In general, a closed-loop hydraulic power transmission system (e.g., a closed-loop hydro static transmission system) is a hydraulic system in which a travel motor is rotated using a work fluid discharged from a travel pump driven by an engine, where the work fluid discharged from the pump returns to a hydraulic pump via the travel motor, rather than returning to a hydraulic tank. US 8646263 B2 describes a work vehicle and a method for controlling a work vehicle.

### SUMMARY

The invention is set out in the appended set of claims.
Embodiments of the present invention may be directed to a power transmission device for a construction machine capable of preventing a rapid increase of a capacity of a travel motor when the construction machine is switched to a stop state while traveling.

According to an embodiment, a power transmission device for a construction machine, transmitting a driving force of an engine to a wheel, includes: a travel pump driven by the engine to discharge a work hydraulic pressure in one of a first direction and a second direction; an auxiliary pump configured to form a pilot hydraulic pressure; a direction switching valve configured to control a swash plate of the travel pump through the pilot hydraulic pressure; a main pilot flow path configured to supply the pilot hydraulic pressure supplied from the auxiliary pump to the direction switching valve; a travel motor of which a rotation direction is determined according to a discharge direction of the travel pump; and a first pilot flow path branched from one side of the main pilot flow path and supplying the pilot hydraulic pressure to control a capacity of the travel motor.

In some embodiments, the auxiliary pump may be directly connected to the engine.

In some embodiments, the pilot hydraulic pressure supplied through the first pilot flow path may reduce the capacity of the travel motor.

In some embodiments, the pilot hydraulic pressure may change the capacity of the travel motor in inverse proportion to a rotation speed of the engine.

In some embodiments, the first pilot flow path may supply the pilot hydraulic pressure to the travel motor when the direction switching signal is neutral.

In some embodiments, the first pilot flow path may supply the pilot hydraulic pressure to the travel motor when the direction switching signal is switched to neutral from any one of forward or reverse.

In some embodiments, the first pilot flow path may supply the pilot hydraulic pressure to the travel motor when the direction switching valve is released.

In some embodiments, the direction switching valve may control at least one of a tilt direction and a tilt angle of the swash plate of the travel pump.

In some embodiments, the travel motor may include: a capacity control piston for controlling the capacity of the travel motor; and a travel motor valve configured to supply the work hydraulic pressure to the capacity control piston when the pilot hydraulic pressure is applied.

In some embodiments, the power transmission device for a construction machine may further include: an electric proportional pressure reduction valve disposed in the main pilot flow path to control the pilot hydraulic pressure supplied to the direction switching valve; and a controller configured to control the electric proportional pressure reduction valve according to an operation amount of an accelerator pedal.

In some embodiments, the controller may control the electric proportional pressure reduction valve in a direction in which the pilot hydraulic pressure is reduced as the operation amount of the accelerator pedal decreases.

In some embodiments, the controller may detect whether a cruise mode is on, and when the cruise mode is on, the controller may control the electric proportional pressure reduction valve to be fixed so that the pilot hydraulic pressure becomes a maximum.

In some embodiments, the power transmission device for a construction machine may further include: an FNR operation lever for generating an FNR operation signal by an operator's operation, and when a current FNR state of the construction machine and the FNR operation signal are different from each other, the controller may control the electric proportional pressure reduction valve so that the pilot hydraulic pressure becomes a minimum.

In some embodiments, the power transmission device for a construction machine may further include: a work device pump driven by the engine to operate a work device, and when the travel pump and the work device pump are driven concurrently, the controller may control the electric proportional pressure reduction valve in a direction in which the pilot hydraulic pressure is reduced as the operation amount of the accelerator pedal decreases.

### EFFECTS OF THE INVENTION

Accodring to one or more embodiments of the present invention, the power transmission device for a construction machine may prevent a rapid increase of a capacity of a travel motor when the construction machine is switched to a neutral state for stopping during high-speed driving, thereby preventing an excessive load on an engine by the travel motor.

### BRIEF DESCRIPTION OF THE DRAWINGS

A more complete appreciation of the present invention will become more apparent by describing in detail embodiments thereof with reference to the accompanying drawings, wherein:
FIG. 1 is a hydraulic circuit diagram illustrating a conventional power transmission device.
FIG. 2 is a hydraulic circuit diagram illustrating a power transmission device according to various embodiments of the present invention.
FIG. 3 is a hydraulic circuit diagram for controlling a travel pump of a construction machine according to various embodiments of the present invention.
FIG. 4 is a block diagram illustrating a relationship between components for controlling a travel pump of a construction machine according to various embodiments of the present invention.

### DETAILED DESCRIPTION

Hereinafter, some embodiments of the present invention will be described with reference to exemplary drawings for convenience of description. In describing the reference numerals for the components of each drawing, the same components are denoted by the same reference numerals as much as possible even if they are illustrated on different drawings.

The terms or words used in the present specification and claims should not be limited to their ordinary or dictionary meanings, and it should be interpreted as meaning and concept consistent with the technical idea of the present invention based on the principle that the inventor may appropriately define the concept of the term in order to best describe his or her invention. In describing the components of embodiment of the present invention, terms such as first, second, A, B, (a), (b), and the like may be used. These terms are only for distinguishing the elements from other elements, and the essence, order, or sequence of the elements are not limited by the terms. When it is described that a component is 'connected' or 'coupled' to another component, the component may be directly connected or coupled to the other component, but it should be understood that another component may be 'connected' or 'coupled' between the component and the other component.

Accordingly, embodiments described in the present specification and the configurations illustrated in the drawings are only most preferred embodiments of the present invention, so it should be understood that there may be equivalents and variations that may replace them at the time of the present application. In addition, detailed descriptions of well-known functions and configurations that may unnecessarily obscure the present invention will be omitted.

Hereinafter, a wheel excavator will be described as an example of a construction machine to which the hydraulic system of the present invention is applied, but it is obvious that the concept includes all the various construction machines used in the construction site, such as dozers, loaders, and forklifts.

The present invention relates to a closed-loop hydraulic power transmission device (e.g., a closed-loop hydro static transmission divice) in which a rapid increase of a capacity of a travel motor 170 may be prevented when the construction machine is switched to a neutral state for stopping during high-speed driving, thereby preventing an excessive load on an engine 1 due to the travel motor 170.

Hereinafter, a power transmission device for a construction machine according to various embodiments of the present invention will be described in detail with reference to the accompanying drawings.

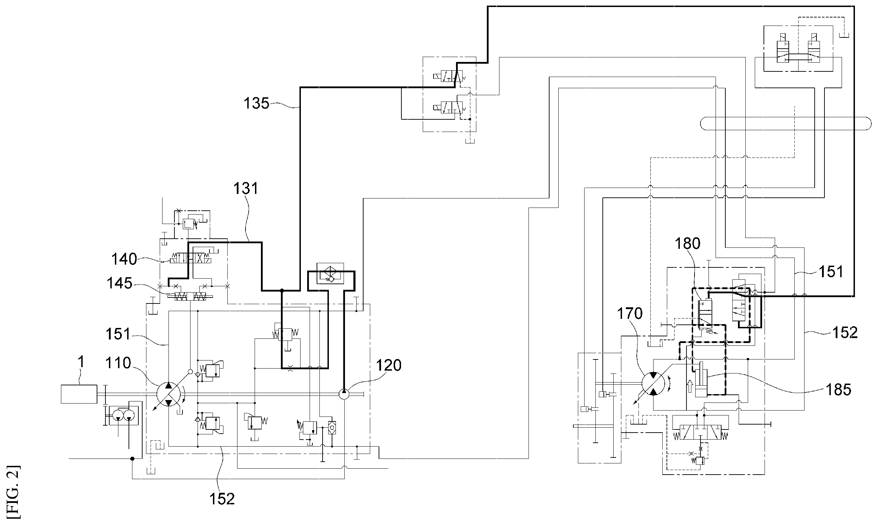

FIG. 2 is a hydraulic circuit diagram illustrating a power transmission device according to various embodiments of the present invention.

A power transmission device for a construction machine according to various embodiments of the present invention may include a travel pump 110 using a variable swash plate; and a travel motor 170 using a fixed-type swash plate that is rotatable using a hydraulic oil discharged from the travel pump 110, and may be configured to transmit a power generated by an engine 1 to the wheels. The power transmission device for a construction machine according to the present invention may include a travel pump 110, an auxiliary pump 120, a direction switching valve, a main pilot flow path 131, a travel motor 170, and a first pilot flow path 135. In addition, the power transmission device for a construction machine according to the present invention may further include an electric proportional pressure reduction valve (e.g., a decompression valve) and a controller 190.

The travel pump 110 may be provided to be driven by the engine 1 such that a work hydraulic pressure may be discharged. The travel pump 110 may include a bi-directional type hydraulic pump using a variable swash plate in which a tilting direction (e.g., an inclination direction) may be varied in a first direction (e.g., forward or (+) direction) or in a second direction (e.g., reverse or (-) direction).

Hereinafter, the first direction may mean a discharge direction of the work hydraulic pressure of the travel pump 110 and/or a direction to which the direction switching valve 140 of the travel pump 110 to be described below is switched, whereby a rotational direction of the travel motor 170 becomes the forward direction. In addition, the second direction may mean a discharge direction of the work hydraulic pressure of the travel pump 110 and/or a direction to which the direction switching valve 140 of the travel pump 110 to be described below is switched, whereby a rotational direction of the travel motor 170 becomes the reverse direction.

In the travel pump 110, the tilting direction of the swash plate may be changed to the first direction or the second direction by the direction switching valve 140. When the direction switching valve 140 is switched to the first direction or the second direction according to a direction switching signal by an operator's operation, a pilot hydraulic pressure may be supplied to a direction switching piston 145 such that the tilting direction of the swash plate of the travel pump

In an embodiment, when the direction switching valve 140 is switched to the first direction according to a forward signal, the pilot hydraulic pressure may be supplied to the direction switching piston 145, and the tilting direction of the swash plate may change to the first direction according to a movement of the piston. The work hydraulic pressure discharged in the first direction from the travel pump 110 may be supplied to the travel motor 170 through a first work fluid supply flow path 151, such that the rotational direction of the travel motor 170 may become the forward direction.

In an embodiment, when the direction switching valve 140 is switched to the second direction according to a reverse signal, the pilot hydraulic pressure may be supplied to the direction switching piston 145, and the tilting direction of the swash plate may change to the second direction according to a movement of the piston. The work hydraulic pressure discharged in the second direction from the travel pump 110 may be supplied to the travel motor 170 through a second work fluid supply flow path 152, such that the rotational direction of the travel motor 170 may become the reverse direction.

The travel pump 110 is driven by the engine 1. As a rotation speed of the engine 1 increases (e.g., becomes higher), a tilting angle of the swash plate increases, thereby increasing a capacity of the travel pump 110, and conversely, a tilting angle of the swash plate of the travel motor 170 decreases, thereby decreasing a capacity of the travel motor 170, such that the rotation speed may increase.

In general, in wheel-type construction machines, a work device pump for transmitting a power to the work device is provided separately from the travel pump. In the case of a high-load work, a high RPM of the engine is required to increase an output of the work device pump, but in the case of the travel pump, however, when the high RPM of the engine is used, a travel pilot pressure increases and the capacity increases, making it difficult to travel at low speed.

Accordingly, in the present invention, an electric proportional pressure reduction valve (e.g., an electro-proportional pressure reduction valve) 160 capable of controlling a travel pilot pressure supplied from the auxiliary pump 120 according to an operation amount of an accelerator pedal 105 by an operator may be provided in the main pilot flow path 131 between the auxiliary pump 120 and the direction switching valve 140.

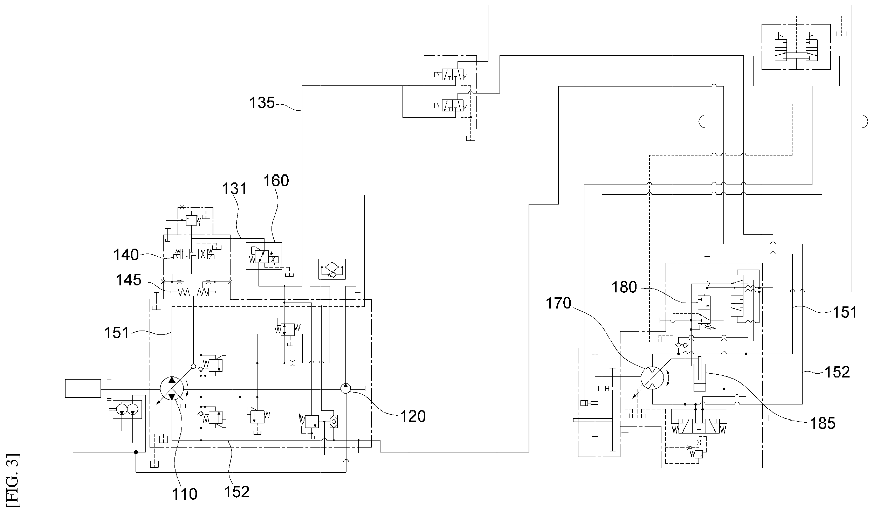

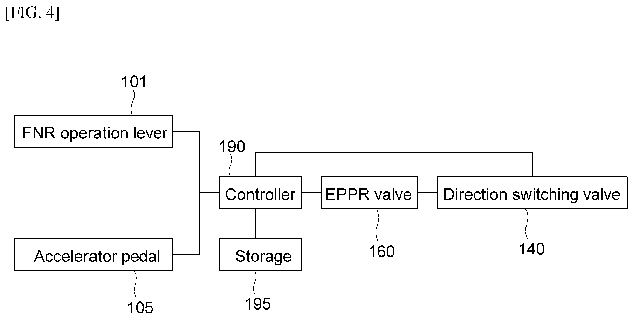

A method of controlling the pilot hydraulic pressure using the electric proportional pressure reduction valve 160 will be described with reference to FIGS. 3 and 4 as follows.

The electric proportional pressure reduction valve (hereinafter, EPPR valve) 160 may be disposed in the main pilot flow path 131 between the auxiliary pump 120 and a direction switching solenoid valve (e.g., sol valve). The EPPR valve 160 may be controlled by a control current that is converted and output by the controller 190 according to an operation amount (%) of the accelerator pedal 105 by the operator. When the operation amount of the accelerator pedal 105 is substantially the minimum (e.g., 0 %), the EPPR valve 160 may be pressure-reduced so that the pilot hydraulic pressure supplied to the direction switching solenoid valve may be substantially minimized. On the other hand, when the operation amount of the accelerator pedal 105 is substantially the maximum (e.g., 100 %), the EPPR valve 160 may be pressure-reduced so that the pilot hydraulic pressure supplied to the direction switching solenoid valve may be substantially maximized.

When the engine of the construction machine rotates at high speed, the pilot hydraulic pressure supplied from the auxiliary pump 120 is formed at a high pressure according to the engine rotation speed. In the present invention, however, since the EPPR valve 160 of which an opening degree is controlled according to the operation amount of the accelator pedal 105 is disposed in the main pilot flow path 131 in front of the direction switching solenoid valve, low-speed traveling may be possible even when the high RPM of the engine is used.

The controller 190 according to various embodiments of the present invention may control the EPPR valve 160 and the direction switching valve 140 described above. Hereinafter, a method of controlling the EPPR valve 160 and the direction switching valve 140 by the controller 190 proposed by the present invention will be described in detail.

The controller 190 may receive an operation amount of the accelerator pedal 105 sensed through various sensors. The operation amount of the accelerator pedal 105 may be input as a percentage (%) of pressurization as compared to an initial state, between the initial state (0 %) in which the operator does not operate the pedal and a maximum pressurized state (100 %) according to the operation.

The controller 190 may control the electric proportional pressure reduction valve 160 according to the operation amount of the accelerator pedal 105. As the operation amount of the accelerator pedal 105 decreases, the electric proportional pressure reduction valve 160 may be controlled in a direction in which the pilot hydraulic pressure is reduced.

In an embodiment, the controller 190 may detect whether a cruise mode is on, and when the cruise mode is on, the controller 190 may control the electric proportional pressure reduction valve 160 to be fixed so that the pilot hydraulic pressure becomes the maximum. In addition, the present invention may further include an FNR operation lever 101 for generating an FNR operation signal by the operator's operation, and when a current FNR state of the construction machine is different from the FNR operation signal, the controller 190 may control the electric proportional pressure reduction valve 160 so that the pilot hydraulic pressure may become substantially minimized.

In an embodiment, in controlling of the pilot hydraulic pressure through the electric proportional pressure reduction valve 160, the controller 190 may control the electric proportional pressure reduction valve 160 to have a value such that the pilot hydraulic pressure may become the smallest from among a first value of the pilot hydraulic pressure determined in a direction such that the pressure is reduced as the operation amount of the accelerator pedal 105 decreases, a second value of the pilot hydraulic pressure determined according to whether the cruise mode is on, or a third value of the pilot hydraulic pressure determined when a current travel state and a singal according to an operation lever is different from each other.

In an embodiment, when the operation amount (%) of the accelerator pedal 105 is input, the controller 190 may convert it into a control current for controlling the electric proportional pressure reduction valve 160 and output the control current. The controller 190 may control the opening degree of the electric proportional pressure reduction valve 160 by using the output control current.

When the cruise mode in which a travel speed is automatically controlled according to a distance from a vehicle in front is turned on, the controller 190 may output the control current fixed to a minimum value (200 mA) so that the output of the travel pump 110 may be maintained at maximum.

When the current FNR state of the construction machine and the FNR operation signal input by the operator's operation of the FNR operation lever 101 are different from each other, the controller 190 may output the control current fixed to a maximum value (1500 mA) so that the travel speed may be slowed down to a minimum. For example, when it is determined that the current FNR state of the construction machine is forward, but the FNR operation signal input by the operation lever is not the forward signal, the controller 190 may output the control current fixed to a maximum value (1500 mA). When it is determined that the current FNR state of the construction machine is reverse, but the FNR operation signal input by the operation lever is not the reverse signal, the controller 190 may also output the control current fixed to a maximum value (1500 mA). In addition, when it is determined that the current FNR state of the construction machine is neutral, or when the FNR operation signal input by the operation lever is neutral, the controller 190 may also output the control current fixed to a maximum value (1500 mA).

In addition, when the controller 190 outputs the control current as a changed value, in a case where the current value increases, the controller 190 may output the control current to have a predetermined slope (e.g., a constant slope). For example, when the current value increases, the controller 190 may output the control current to have a slope of 500 mA/sec.

In addition, the present invention may include a work device pump driven by the engine 1 to operate the work device, and when the travel pump 110 and the work device pump are driven concurrently, the controller 190 may control the electric proportional pressure reduction valve 160 in a direction in which the pilot hydraulic pressure is reduced as the operation amount decreases.

The auxiliary pump 120 may be provided on one side of the travel pump 110, and may be provided to be driven by the engine 1 to form a pilot hydraulic pressure. The pilot hydraulic pressure formed in the auxiliary pump 120 may be supplied to the direction switching valve 140 through the main pilot flow path 131. When the direction switching valve 140 is switched to the first direction or the second direction by a direction switching signal, the pilot hydraulic pressure may be supplied to the direction switching piston 145 to move the piston. In addition, in the present invention, the pilot hydraulic pressure supplied from the auxiliary pump 120 may be supplied to the travel motor 170 through the first pilot flow path 135. In this regard, a detailed description will be given below.

The auxiliary pump 120 may be directly connected to the engine 1, and when the user puts the traveling in neutral, the engine may be reduced to about 800 RPM, and in such a case, the RPM of the auxiliary pump 120 may also be reduced proportionally, and a capacity of the travel motor 170 may be controlled at the corresponding RPM. In addition, even when the engine 1 is turned off, since the engine 1 is not terminated to 0 RPM at once, it is linked to the engine 1 to control the capacity of the travel motor 170 gradually.

The direction switching valve 140 may be controlled by the direction switching signal to supply the pilot hydraulic pressure to the direction switching piston 145. The direction switching valve 140 may include a solenoid valve, and as it is switched to the first direction when a power is applied according to the forward signal from among the direction switching signals, it may move the direction switching piston 145 in a corresponding direction. In addition, as the direction switching valve 140 is switched to the second direction when a power is applied according to a reverse signal, it may move the direction switching piston 145 in a corresponding direction. When the direction switching signal is a neutral signal, the power application of the solenoid valve is released, and in such a case, the pilot hydraulic pressure is not supplied to the direction switching piston 145.

The main pilot flow path 131 may be a flow path formed between the auxiliary pump 120 and the direction switching valve 140, and may supply the pilot hydraulic pressure formed in the auxiliary pump 120 to the direction switching valve 140. According to various embodiments of the present disclosure, a first pilot flow path 135 to be described below may be branched from one side of the main pilot flow path 131. Accordingly, the pilot hydraulic pressure supplied from the auxiliary pump 120 may be supplied to the direction switching valve 140 as well as to the travel motor 170 for capacity control of the travel motor 170.

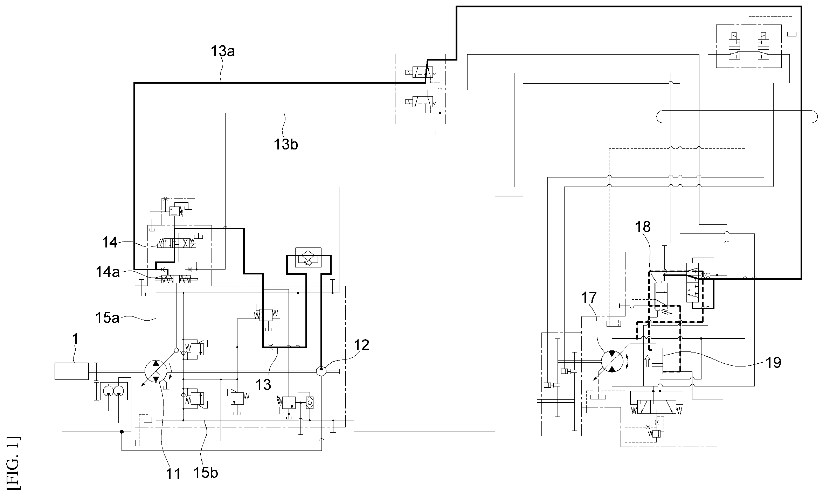

In an embodiment, referring to FIG. 1, in a general closed-loop hydraulic power transmission device, the pilot hydraulic pressure supplied from the auxiliary pump 12 may be supplied to the side of the travel motor 17 from a rear end of the direction switching valve. Specifically, when the direction switching valve 14 is switched in the first direction, the pilot hydraulic pressure may be supplied to the direction switching piston 14a, and concurrently, may be supplied through the second pilot flow path 13a for capacity control of the travel motor 17. In addition, when the direction switching valve 14 is switched to the second direction, the pilot hydraulic pressure may be supplied to the side of the travel motor 17 through the third pilot flow path 13b.

However, when the flow path for supplying the pilot hydraulic pressure to the side of the travel motor 17 is formed downstream of the direction switching valve 14 as illustrated in FIG. 1, when the direction switching signal is neutral, the power application of the direction switching valve 14 is released, and the supply of the pilot hydraulic pressure to the direction switching piston 14a and the travel motor 17 may be blocked.

Accordingly, when the neutral signal is applied to the direction switching valve 14 to switch the direction during high-speed traveling of the construction machine, the direction switching valve 14 is released, and accordingly, the pilot hydraulic pressure having been supplied to the travel motor 17 is rapidly reduced. In such a case, the capacity of the travel pump 11 is changed to become substantially the minimum and conversely, the capacity of the travel motor 17 is changed to become substantially the maximum, and there is a problem in that an excessive rotational force (load) acts on the engine 1, as the travel motor 17 connected to the wheel serves as the travel pump 11, and conversely, the travel pump 11 serves as the motor, due to an inertia of the equipment currently in the travel state.

Referring back to FIG. 2, in the present invention, even when the direction switching valve 140 is released as the neutral signal is applied to the direction switching valve 140 to change the direction during high-speed traveling of the construction machine, the pilot hydraulic pressure may be supplied to the travel motor 170 through the first pilot flow path 135. In the present invention, the pilot hydraulic pressure may be supplied to change the capacity of the travel motor 170 in inverse proportion to a rotation speed of the engine 1.

The first pilot flow path 135 proposed in the present invention may be formed to supply the pilot hydraulic pressure from a front end of the direction switching valve 140 to the side of the travel motor 170. The first pilot flow path 135 may be branched from the main pilot flow path 131 formed between the auxiliary pump 120 and the direction switching valve 140. The first pilot flow path 135 may include one end connected to the main pilot flow path 131, and another end connected to the travel motor valve 180, such that the pilot hydraulic pressure supplied from the auxiliary pump 120 may be supplied from the front end of the direction switching valve 140 to the side of the travel motor 170.

That is, according to various embodiments of the present invention, when a direction change is required while the construction machine is traveling at high speed, the neutral signal may be applied to the direction switching valve 140 to stop the equipment, in which case the power application for the direction switching valve 140 may be released, and accordingly, the downstream connection may be blocked even if the pilot hydraulic pressure is supplied through the main pilot flow path 131.

However, in the present invention, since the first pilot flow path 135 is formed upstream of the direction switching valve 140, the pilot hydraulic pressure formed by the auxiliary pump 120 may be supplied to the travel motor 170 through the main pilot flow path 131 and the first pilot flow path 135 branched therefrom. According to various embodiments of the present invention, even if the neutral signal is applied to the direction switching valve 140 while the construction machine is traveling at high speed, the pilot hydraulic pressure may be continuously supplied to the valve of the travel motor 170 through the first pilot flow path 135, and accordingly, it is possible to prevent the capacity of the travel motor 170 from being maximized. That is, by reducing the capacity of the travel motor 170 and preventing it from being maximized, it is possible to prevent an excessive rotational force from acting on the engine 1 due to the travel inertia of the construction machine.

The travel motor 170 may be connected to a gearbox (not illustrated) in a lower body of the construction machine to transmit a driving force to the wheel (not illustrated). A rotation direction of the travel motor 170 may be determined according to a direction in which the work hydraulic pressure is discharged from the travel pump 110. In an embodiment, when the direction switching valve 140 is switched to the first direction and the discharge direction of the travel pump 110 is changed to the first direction, the work hydraulic pressure may be supplied to the travel motor 170 through the first work fluid supply flow path 151, and the rotation direction of the travel motor 170 may be a forward direction (FWD). In addition, when the direction switching valve 140 is switched to the second direction and the discharge direction of the travel pump 110 is changed to the second direction, the work hydraulic pressure may be supplied to the travel motor 170 through the second work fluid supply flow path 152, and the rotation direction of the travel motor 170 may be a reverse direction (REV).

The travel motor 170 may include a travel motor valve 180 and a capacity control piston 185. The travel motor valve 180 may be connected to the first pilot flow path 135 to supply the pilot hydraulic pressure formed in the auxiliary pump 120. When the pilot hydraulic pressure is applied to the travel motor valve 180, the work hydraulic pressure supplied from the travel pump 110 may flow into a large-diameter chamber of a capacity control piston 185, and a tilting angle of the swash plate may become small such that the capacity of the travel motor 170 may be reduced.

As described above, in the case of a general closed-loop hydraulic power transmission device, when the direction switching signal is converted to neutral, the direction change valve 140 is released and the pilot hydraulic pressure may not be applied to the valve of the travel motor 170. Accordingly, the pressure formed in the large-diameter chamber of the capacity control pixton 185 is drained, and the tilting angle of the swash plate increases, thereby increasing the capacity of the travel motor 170.

However, in the present invention, since the pilot hydraulic pressure may be continuously applied to the travel motor valve 180 through the first pilot flow path 135 branched from the main pilot flow path 131, even with a sudden neutral signal during high-speed traveling, it is possible to prevent the capacity of the travel motor 170 from being increased.

Hereinabove, although it has been described that all the components constituting an embodiment of the present invention operate by being combined into one or combined to operate, the present invention is not necessarily limited to this embodiment. That is, within the scope of the object of the present invention, all the components may operate by selectively combining one or more components. In addition, terms such as 'include', 'comprise', or 'have' described above mean that the component may be included, and it should be understood that other components are not excluded, and rather, other components may be further included, unless otherwise stated. All terms, including technical and scientific terms, have the same meaning as commonly understood by one of ordinary skill in the art to which the present invention belongs, unless otherwise defined. Terms commonly used, such as those defined in the dictionary, should be interpreted as being consistent with the contextual meaning of the related art, and are not interpreted in an ideal or excessively formal meaning unless explicitly defined in the present invention.

The above description is merely illustrative of the technical spirit of the present invention, and various modifications and variations will be possible without departing from the essential characteristics of the present invention by those skilled in the art to which the present invention pertains. Accordingly, the embodiments disclosed in the present invention are not intended to limit the technical spirit of the present invention, but to explain, and the scope of the technical spirit of the present invention is not limited by these embodiments. The protection scope of the present invention should be construed by the following claims.

### [Reference numeral]

1: engine
110: travel pump
120: auxiliary pump
131: main pilot flow path
135: first pilot flow path
140: direction switching valve
145: direction switching piston
151: first work fluid supply flow path
152: second work fluid supply flow path
160: electric proportional pressure reduction valve
170: travel motor
180: travel motor valve
185: capacity control piston
190: controller

## Claims

1. A power transmission device for a construction machine, the power transmission device for transmitting a driving force of an engine (1) to a wheel and comprising:
a travel pump (110) for being driven by the engine (1), configured to discharge a work hydraulic pressure in one of a first direction and a second direction;
an auxiliary pump (120) configured to form a pilot hydraulic pressure;
a direction switching valve (140) configured to control a swash plate of the travel pump (110) through the pilot hydraulic pressure;
a main pilot flow path (131) configured to supply the pilot hydraulic pressure supplied from the auxiliary pump (120) to the direction switching valve (140);
a travel motor (170) of which a rotation direction is determined according to a discharge direction of the travel pump (110);
at least one work fluid supply flow path (151, 152) configured to supply the work hydraulic pressure supplied from the travel pump (110) to the travel motor (170); and
**characterised by**
a first pilot flow path (135) branched from one side of the main pilot flow path (131) and supplying the pilot hydraulic pressure to control a capacity of the travel motor (170), separately from the work fluid supply flow path (151, 152).

2. The power transmission device for a construction machine of claim 1, wherein the auxiliary pump (120) is directly connected to the engine (1).

3. The power transmission device for a construction machine of claim 1, wherein the pilot hydraulic pressure supplied through the first pilot flow path (135) is configured to reduce the capacity of the travel motor (170).

4. The power transmission device for a construction machine of claim 1, wherein the pilot hydraulic pressure is configured to change the capacity of the travel motor (170) in inverse proportion to a rotation speed of the engine (1).

5. The power transmission device for a construction machine of claim 1, wherein the first pilot flow path (135) is configured to suppy the pilot hydraulic pressure to the travel motor (170) when the direction switching signal is neutral.

6. The power transmission device for a construction machine of claim 1, wherein the first pilot flow path (135) is configured to supply the pilot hydraulic pressure to the travel motor (170) when the direction switching signal is switched to neutral from any one of forward or reverse.

7. The power transmission device for a construction machine of claim 1, wherein the first pilot flow path (135) is configured to supply the pilot hydraulic pressure to the travel motor (170) when the direction switching valve (140) is released.

8. The power transmission device for a construction machine of claim 1, wherein the direction switching valve (140) is configured to control at least one of a tilt direction and a tilt angle of the swash plate of the travel pump (110).

9. The power transmission device for a construction machine of claim 1, wherein the travel motor (170) comprises:
a capacity control piston (185) for controlling the capacity of the travel motor (170); and
a travel motor valve (180) configured to supply the work hydraulic pressure to the capacity control piston (185) when the pilot hydraulic pressure is applied.

10. The power transmission device for a construction machine of claim 1, further comprising:
an electric proportional pressure reduction valve (160) disposed in the main pilot flow path (131) to control the pilot hydraulic pressure supplied to the direction switching valve (140); and
a controller (190) configured to control the electric proportional pressure reduction valve (160) according to an operation amount of an accelerator pedal.

11. The power transmission device for a construction machine of claim 10, wherein the controller (190) is configured to control the electric proportional pressure reduction valve (160) in a direction in which the pilot hydraulic pressure is reduced as the operation amount of the accelerator pedal decreases.

12. The power transmission device for a construction machine of claim 10, wherein the controller (190) is configured to detect whether a cruise mode is on, and
when the cruise mode is on, the controller (190) is configured to control the electric proportional pressure reduction valve (160) to be fixed so that the pilot hydraulic pressure becomes a maximum.

13. The power transmission device for a construction machine of claim 10, further comprising an FNR operation lever (101) for generating an FNR operation signal by an operator's operation, and
when a current FNR state of the construction machine and the FNR operation signal are different from each other, the controller (190) is configured to control the electric proportional pressure reduction valve (160) so that the pilot hydraulic pressure becomes a minimum.

14. The power transmission device for a construction machine of claim 10, further comprising a work device pump driven by the engine (1) to operate a work device, and
when the travel pump (110) and the work device pump are driven concurrently, the controller (190) is configured to control the electric proportional pressure reduction valve (160) in a direction in which the pilot hydraulic pressure is reduced as the operation amount of the accelerator pedal decreases.

## Patentansprüche

1. Kraftübertragungsvorrichtung für eine Baumaschine, wobei die Kraftübertragungsvorrichtung zum Übertragen einer Antriebskraft eines Motors (1) zu einem Rad dient und umfasst:
eine Fahrpumpe (110), die dazu bestimmt ist, durch den Motor (1) angetrieben zu werden, und dazu eingerichtet ist, einen Arbeitshydraulikdruck in eine von einer ersten Richtung und einer zweiten Richtung auszugeben;
eine Hilfspumpe (120), die dazu eingerichtet ist, einen Pilothydraulikdruck zu bilden;
ein Richtungsumschaltventil (140), das dazu eingerichtet ist, eine Taumelscheibe der Fahrpumpe (110) über den Pilothydraulikdruck zu steuern;
einen Hauptpilotströmungspfad (131), der dazu eingerichtet ist, dem Richtungsumschaltventil (140) den von der Hilfspumpe (120) abgegebenen Pilothydraulikdruck zuzuführen;
einen Fahrmotor (170), von dem eine Drehrichtung gemäß einer Ausgaberichtung der Fahrpumpe (110) bestimmt wird;
mindestens einen Arbeitsfluid-Zufuhrströmungspfad (151, 152), der dazu eingerichtet ist, den von der Fahrpumpe (110) abgegebenen Arbeitshydraulikdruck dem Fahrmotor (170) zuzuführen; und
**gekennzeichnet durch**
einen ersten Pilotströmungspfad (135), der von einer Seite des Hauptpilotströmungspfades (131) abzweigt und den Pilothydraulikdruck zum Steuern einer Leistung des Fahrmotors (170) separat von dem Arbeitsfluid-Zufuhrströmungspfad (151, 152) zuführt.

2. Kraftübertragungsvorrichtung für eine Baumaschine nach Anspruch 1, wobei die Hilfspumpe (120) direkt mit dem Motor (1) verbunden ist.

3. Kraftübertragungsvorrichtung für eine Baumaschine nach Anspruch 1, wobei der über den ersten Pilotströmungspfad (135) zugeführte Pilothydraulikdruck dazu eingerichtet ist, die Leistung des Fahrmotors (170) zu verringern.

4. Kraftübertragungsvorrichtung für eine Baumaschine nach Anspruch 1, wobei der Pilothydraulikdruck dazu eingerichtet ist, die Leistung des Fahrmotors (170) umgekehrt proportional zu einer Drehzahl des Motors (1) zu ändern.

5. Kraftübertragungsvorrichtung für eine Baumaschine nach Anspruch 1, wobei der erste Pilotströmungspfad (135) dazu eingerichtet ist, dem Fahrmotor (170) den Pilothydraulikdruck zuzuführen, wenn das Richtungsumschaltsignal Neutral ist.

6. Kraftübertragungsvorrichtung für eine Baumaschine nach Anspruch 1, wobei der erste Pilotströmungspfad (135) dazu eingerichtet ist, dem Fahrmotor (170) den Pilothydraulikdruck zuzuführen, wenn das Richtungsumschaltsignal von einem von Vorwärts und Rückwärts zu Neutral umgeschaltet wird.

7. Kraftübertragungsvorrichtung für eine Baumaschine nach Anspruch 1, wobei der erste Pilotströmungspfad (135) dazu eingerichtet ist, dem Fahrmotor (170) den Pilothydraulikdruck zuzuführen, wenn das Richtungsumschaltventil (140) freigegeben wird.

8. Kraftübertragungsvorrichtung für eine Baumaschine nach Anspruch 1, wobei das Richtungsumschaltventil (140) dazu eingerichtet ist, mindestens eines von einer Neigungsrichtung und einem Neigungswinkel der Taumelscheibe der Fahrpumpe (110) zu steuern.

9. Kraftübertragungsvorrichtung für eine Baumaschine nach Anspruch 1, wobei der Fahrmotor (170) umfasst:
einen Leistungssteuerkolben (185) zum Steuern der Leistung des Fahrmotors (170); und
ein Fahrmotorventil (180), das dazu eingerichtet ist, dem Leistungssteuerkolben (185) den Arbeitshydraulikdruck zuzuführen, wenn der Pilothydraulikdruck angelegt wird.

10. Kraftübertragungsvorrichtung für eine Baumaschine nach Anspruch 1, des Weiteren umfassend:
ein elektrisches Proportional-Druckminderungsventil (160), das in dem Hauptpilotströmungspfad (131) angeordnet ist, um den dem Richtungsumschaltventil (140) zugeführten Pilothydraulikdruck zu steuern; und
eine Steuerung (190), die dazu eingerichtet ist, das elektrische Proportional-Druckminderungsventil (160) gemäß einem Betätigungsbetrag eines Gaspedals zu steuern.

11. Kraftübertragungsvorrichtung für eine Baumaschine nach Anspruch 10, wobei die Steuerung (190) dazu eingerichtet ist, das elektrische Proportional-Druckminderungsventil (160) in eine Richtung zu steuern, in der der Pilothydraulikdruck in dem Maße verringert wird, wie der Betätigungsbetrag des Gaspedals kleiner wird.

12. Kraftübertragungsvorrichtung für eine Baumaschine nach Anspruch 10, wobei die Steuerung (190) dazu eingerichtet ist zu detektieren, ob ein Tempomat-Modus aktiv ist, und,
wenn der Tempomat-Modus aktiv ist, die Steuerung (190) dazu eingerichtet ist, das elektrische Proportional-Druckminderungsventil (160) so zu steuern, dass der Pilothydraulikdruck zu einem Maximum wird.

13. Kraftübertragungsvorrichtung für eine Baumaschine nach Anspruch 10, des Weiteren umfassend einen FNR-Betätigungshebel (101), um durch die Betätigung eines Bedieners ein FNR-Betätigungssignal zu generieren, und,
wenn sich ein momentaner FNR-Zustand der Baumaschine und das FNR-Betätigungssignal voneinander unterscheiden, die Steuerung (190) dazu eingerichtet ist, das elektrische Proportional-Druckminderungsventil (160) so zu steuern, dass der Pilothydraulikdruck zu einem Minimum wird.

14. Kraftübertragungsvorrichtung für eine Baumaschine nach Anspruch 10, des Weiteren umfassend eine durch den Motor (1) angetriebene Arbeitsgerätepumpe zum Betreiben eines Arbeitsgerätes, und,
wenn die Fahrpumpe (110) und die Arbeitsgerätepumpe gleichzeitig angetrieben werden, die Steuerung (190) dazu eingerichtet ist, das elektrische Proportional-Druckminderungsventil (160) in eine Richtung zu steuern, in der der Pilothydraulikdruck in dem Maße verringert wird, wie der Betätigungsbetrag des Gaspedals kleiner wird.

## Revendications

1. Dispositif de transmission de force pour un engin de chantier, le dispositif de transmission de force étant destiné à transmettre une force motrice d'un moteur (1) à une roue et comprenant :
une pompe de déplacement (110) destinée à être entraînée par le moteur (1), configurée pour décharger une pression hydraulique de travail dans une parmi une première direction et une seconde direction ;
une pompe auxiliaire (120) configurée pour former une pression pilote hydraulique ;
une soupape d'inversion de direction (140) configurée pour commander un plateau oscillant de la pompe de déplacement (110) via la pression pilote hydraulique ;
un trajet d'écoulement pilote principal (131) configuré pour fournir la pression pilote hydraulique fournie à partir de la pompe auxiliaire (120) à la soupape d'inversion de direction (140) ;
un moteur de déplacement (170) dont un sens de rotation est déterminé en fonction d'un sens de refoulement de la pompe de déplacement (110) ;
au moins un trajet d'écoulement d'alimentation en fluide de travail (151, 152) configuré pour fournir la pression hydraulique de travail fournie à partir de la pompe de déplacement (110) au moteur de déplacement (170) ; et
**caractérisé par**
un premier trajet d'écoulement pilote (135) bifurquant à partir d'un côté du trajet d'écoulement pilote principal (131) et fournissant la pression pilote hydraulique pour commander une capacité du moteur de déplacement (170), séparément du trajet d'écoulement d'alimentation en fluide de travail (151, 152).

2. Dispositif de transmission de force pour un engin de chantier selon la revendication 1, dans lequel la pompe auxiliaire (120) est directement reliée au moteur (1).

3. Dispositif de transmission de force pour un engin de chantier selon la revendication 1, dans lequel la pression pilote hydraulique fournie via le premier trajet d'écoulement pilote (135) est configurée pour réduire la capacité du moteur de déplacement (170).

4. Dispositif de transmission de force pour un engin de chantier selon la revendication 1, dans lequel la pression pilote hydraulique est configurée pour faire varier la capacité du moteur de déplacement (170) de façon inversement proportionnelle à une vitesse de rotation du moteur (1).

5. Dispositif de transmission de force pour un engin de chantier selon la revendication 1, dans lequel le premier trajet d'écoulement pilote (135) est configuré pour fournir la pression pilote hydraulique au moteur de déplacement (170) lorsque le signal d'inversion de direction est le point mort.

6. Dispositif de transmission de force pour un engin de chantier selon la revendication 1, dans lequel le premier trajet d'écoulement pilote (135) est configuré pour fournir la pression pilote hydraulique au moteur de déplacement (170) lorsque le signal d'inversion de direction est basculé sur le point mort à partir d'une quelconque parmi une marche avant ou une marche arrière.

7. Dispositif de transmission de force pour un engin de chantier selon la revendication 1, dans lequel le premier trajet d'écoulement pilote (135) est configuré pour fournir la pression pilote hydraulique au moteur de déplacement (170) lorsque la soupape d'inversion de direction (140) est libérée.

8. Dispositif de transmission de force pour un engin de chantier selon la revendication 1, dans lequel la soupape d'inversion de direction (140) est configurée pour commander au moins un parmi une direction d'inclinaison et un angle d'inclinaison du plateau oscillant de la pompe de déplacement (110).

9. Dispositif de transmission de force pour un engin de chantier selon la revendication 1, dans lequel le moteur de déplacement (170) comprend :
un piston de commande de capacité (135) pour commander la capacité du moteur de déplacement (170) ; et
une soupape de moteur de déplacement (180) est configurée pour fournir la pression hydraulique de travail au piston de commande de capacité (185) lorsque la pression pilote hydraulique est appliquée.

10. Dispositif de transmission de force pour un engin de chantier selon la revendication 1, comprenant en outre:
une soupape de réduction de pression proportionnelle électrique (160) disposée dans le trajet d'écoulement pilote principal (131) pour commander la pression pilote hydraulique fournie à la soupape d'inversion de direction (140) ; et
une commande (190) configurée pour commander la soupape de réduction de pression proportionnelle électrique (160) en fonction d'une quantité d'actionnement d'une pédale d'accélérateur.

11. Dispositif de transmission de force pour un engin de chantier selon la revendication 10, dans lequel la commande (190) est configurée pour commander la soupape de réduction de pression proportionnelle électrique (160) dans une direction dans laquelle la pression pilote hydraulique est réduite dans la mesure où la quantité d'actionnement de la pédale d'accélérateur diminue.

12. Dispositif de transmission de force pour un engin de chantier selon la revendication 10, dans lequel la commande (190) est configurée pour détecter si un mode de croisière est activé, et
lorsque le mode de croisière est activé, la commande (190) est configurée pour commander la soupape de réduction de pression proportionnelle électrique (160) pour qu'elle soit fixe de sorte que la pression pilote hydraulique devient un maximum.

13. Dispositif de transmission de force pour un engin de chantier selon la revendication 10, comprenant en outre un levier de commande FNR (101) pour générer un signal de commande FNR par une commande de l'opérateur, et
lorsqu'un état FNR actuel de l'engin de chantier et le signal de commande FNR sont différents l'un de l'autre, la commande (190) est configurée pour commander la soupape de réduction de pression proportionnelle électrique (160) de sorte que la pression pilote hydraulique devient un minimum.

14. Dispositif de transmission de force pour un engin de chantier selon la revendication 10, comprenant en outre une pompe de dispositif de travail entraînée par le moteur (1) pour faire fonctionner un dispositif de travail, et
lorsque la pompe de déplacement (110) et la pompe de dispositif de travail sont entraînées simultanément, la commande (190) est configurée pour commander la soupape de réduction de pression proportionnelle électrique (160) dans une direction dans laquelle la pression pilote hydraulique est réduite dans la mesure où la quantité d'actionnement de la pédale d'accélérateur diminue.
